# FASCICULE DE BREVET EUROPEEN

(11) **EP 3 710 251 B1**
(45) Date de publication et mention de la délivrance du brevet: **04.01.2023**
(21) Numéro de dépôt: 18804610.6
(22) Date de dépôt: 16.11.2018
(51) Int. Cl.: B60R 13/00, B60R 13/04

(54) **PIÈCE DE CARROSSERIE COMPRENANT UN RELIEF DE DÉCORATION**
KAROSSERIETEIL MIT DEKORATIVEM ERHABENEM MUSTER
BODYWORK PART COMPRISING A DECORATIVE RAISED PATTERN

(30) Priorité: 17.11.2017 FR 1760857
(43) Date de publication de la demande: 23.09.2020
(73) Titulaire: Compagnie Plastic Omnium, 69007 Lyon (FR)
(72) Inventeur: STABLO, Frédéric, 38390 Porcieu Amblagnieu (FR)
(74) Mandataire: LLR
(86) Numéro de dépôt international: PCT/EP2018/081655
(87) Numéro de publication internationale: WO 2019/097034

(56) Documents cités:
- WO-A1-2016/174917
- JP-A- 2010 256 807

## Description

L'invention concerne le domaine de l'automobile, et plus particulièrement les pièces de véhicule automobile en matière plastique comprenant une décoration visible, à effet en trois dimensions, et des procédés de fabrication permettant d'obtenir de telles pièces.

Il est connu d'intégrer un film en matière plastique à la surface d'une pièce de véhicule automobile pour obtenir une décoration à effet en trois dimensions. Le film de faible épaisseur (inférieur à 0,75mm) comprend une ou plusieurs couches transparentes de matière plastique, comprenant typiquement une couche interne, appelée matrice, en polyuréthane et des couches décoratives en polyamide. Les couches décoratives forment les faces externes du film et portent à cet effet un ou plusieurs reliefs permettant d'obtenir un effet de profondeur. Alternativement, une couche de peinture ou un grainage protégé peut être déposé à la surface de la pièce pour obtenir un effet en trois dimensions. JP2010256807 concerne une pièce pour véhicule automobile en matière plastique, comportant une paroi formée d'une partie externe et d'une partie interne. La partie interne est en matériau plastique injecté ayant une face comportant un relief complémentaire à celui de la partie externe à l'interface des deux parties.

Ces techniques de décoration ne permettent pas d'obtenir un décor réel en trois dimensions mais se basent sur un effet de lumière et de couleurs pour produire un effet visuel de relief. De plus, elles sont fragiles et se raient facilement lors du nettoyage.

Par ailleurs, il est difficile de déposer de manière précise un film par surmoulage ou collage sur de grandes surfaces ayant différentes géométries et pouvant présenter des ouvertures. Il est aussi difficile de surmouler un tel film sur une pièce sans dégrader l'effet visuel en trois dimensions qu'il porte en raison des hautes pressions et températures nécessaires à l'injection, particulièrement pour les pièces de grandes dimensions.

L'invention a pour but de remédier à ces inconvénients en fournissant une pièce de carrosserie pour véhicule automobile en matière plastique, comportant une paroi formée d'une partie externe et d'une partie interne, caractérisée en ce que :
- la partie externe comporte une feuille transparente ayant une face comportant un relief local à l'interface des deux parties et une autre face sensiblement lisse à la surface de la paroi, et
- la partie interne est en matériau plastique injecté ayant une face comportant un relief complémentaire à celui de la partie externe à l'interface des deux parties.

La partie externe étant transparente, le relief complémentaire de la partie interne est visible depuis la surface de la paroi. Le relief complémentaire constitue un toute la surface de l'interface. Le relief local et le relief complémentaire sont typiquement un creux (respectivement une protubérance) ou une protubérance (respectivement un creux) à l'interface des deux parties.

Par transparent est entendu que le matériau laisse passer au moins une longueur d'onde du spectre visible.

De plus, la face de la partie externe étant sensiblement lisse à la surface de la paroi, c'est-à-dire que la face ne comprend sensiblement pas de relief local, en particulier elle ne comporte pas le relief local présent sur l'autre face, l'effet décoration est obtenu sans influencer la géométrie externe de la paroi. De plus, une paroi ayant une épaisseur sensiblement constante possède une meilleure transparence aux ondes.

En outre, c'est la partie interne, qui est généralement le support technique de la pièce de carrosserie, qui épouse la forme du relief de la feuille transparente, ce qui ne limite pas la géométrie de la pièce de carrosserie qui peut comporter des formes complexes ou des ouvertures.

Par ailleurs, la feuille transparente ayant une épaisseur plus importante qu'un film traditionnel, elle ne se dégrade pas aux pressions et températures de moulage de la partie interne qui sont typiquement de 100 à 500 bars et de 150 à 250°C dans le cas d'un moulage par injection de pièces de grandes dimensions. De plus, elle permet de protéger le relief complémentaire de la partie interne contre les agressions extérieures.

La pièce de carrosserie peut en outre comporter l'une ou plusieurs des caractéristiques suivantes, prises seules ou en combinaison.
- L'épaisseur de la partie externe est supérieure à 0.75 mm, de préférence supérieure à 2 mm. Les films utilisés pour obtenir un effet visuel en trois dimensions ont une épaisseur inférieure à 0.75 mm et se dégradent aux températures et pressions de moulage usuelles. La feuille transparente ayant une épaisseur plus importante permet de résister à ces conditions de moulage.
- Un dépôt de couleur, de préférence d'encre, est présent au niveau du relief de la partie externe. La présence de couleur, par exemple de nuances de gris, permet de mettre en évidence le relief et d'accentuer son effet de profondeur. Le dépôt de couleur peut être de l'encre utilisée classiquement dans le domaine de l'automobile ou de l'encre de décor ou tout autre type de dépôt de couleur qui adhère à la matière de la partie externe.
- Le relief de la partie externe comprend une gravure apte à diffracter la lumière. Avantageusement, il comprend une pluralité de gravures de tailles microscopiques d'ordre 150µm à 800µm adaptées pour diffracter la lumière et amplifier l'effet en trois dimensions de manière similaire à l'holographie.
- La partiem interne est opaque. Le relief complémentaire opaque a une bonne visibilité depuis l'extérieur de la paroi. Alternativement, la partie interne est transparente. Elle peut avoir un taux de transparence différent de celui de la partie externe, de préférence un taux de transparence inférieur.
- La partie externe est fabriquée dans un matériau choisi parmi : le polypropylène, le polyméthacrylate de méthyle, le polycarbonate, le polytéréphtalate d'éthylène. Ce sont des matériaux plastiques à coût économique, facile à travailler, ayant une transparence adaptée à cet usage, pouvant être facilement réalisés ou trouvées dans le marché à l'épaisseur souhaitée.
- La partie interne est fabriquée dans un matériau choisi parmi : le polypropylène, l'acrylonitrile styrène acrylate, l'acrylonitrile butadiène styrène, le polytéréphtalate d'éthylène. Ces matériaux plastiques sont adaptés pour réaliser des supports techniques ayant une certaine résistance mécanique et les propriétés souhaités de la pièce de structurelle.
- La pièce de carrosserie est une porte, un coffre, un toit, un hayon, un pare-choc ou un bas de caisse. Avantageusement, elle peut être tout type de pièce en matière plastique pour véhicule automobile conçue pour comporter un ou plusieurs reliefs de décoration en trois dimensions.
- La pièce de carrosserie est d'épaisseur globale constante. Cela permet d'obtenir une bonne transparence aux ondes.

L'invention concerne en outre un procédé de fabrication d'une pièce de carrosserie pour véhicule automobile en matière plastique comportant un relief local visible à travers une feuille trasparente ayant une surface extérieure sensiblement lisse caractérisée en ce qu'elle comprend les étapes suivantes :
- mis en place de la feuille transparente en contact d'une empreinte comportant un relief local,
- pression de la feuille transparente contre l'empreinte de façon qu'une de ses faces se déforme et épouse la forme du relief en formant un relief complémentaire, l'autre face conservant une surface sensiblement lisse,
- mis en place de la feuille transparente comprenant le relief complémentaire dans un moule d'injection, et
- injection d'une matière plastique sur la face de la feuille transparente comportant le relief complémentaire.

Le procédé permet d'obtenir une pièce de carrosserie comportant un relief de décoration réel en trois dimensions visible depuis l'extérieur de la pièce et résistant aux agressions extérieures. C'est un procédé simple et n'impliquant pas d'outillages complexes. L'empreinte est conçue avec le ou les reliefs que l'on souhaite obtenir en contreforme sur la pièce finale. Le marquage ou l'emboutissage de la feuille transparente est réalisé à chaud ou à froid, à une pression permettant de réaliser le relief complémentaire sur une face de la feuille transparente sans marquer l'autre face.

Le moulage par injection du relief complémentaire se fait dans des conditions standard de températures et de pressions, typiquement de 100 à 500 bars et de 150 à 250°C et permet d'obtenir le support technique de la pièce de carrosserie. Ce procédé est notamment avantageusement applicable sur des pièce de grande surface et de géométrie complexe.

Par ailleurs, il est possible de réaliser différents types de reliefs complémentaires en modifiant uniquement l'empreinte comportant le relief, ce qui est beaucoup plus simple et moins coûteux que le remplacement d'un moule.

Le procédé peut en outre comporter l'une ou plusieurs des caractéristiques suivantes, prises seules ou en combinaison :
- La feuille transparente est mise en place sur une presse formant l'empreinte comportant le relief. La feuille transparente est déposée sur la presse et c'est sur la face en contact de la presse que se forme le relief. L'emboutissage est réalisé, par exemple, grâce à l'application d'une pression sur l'autre face de la feuille transparente.
- La feuille transparente est mise en contact d'un rouleau de laminage formant l'empreinte comportant le relief. Le rouleau de laminage appuie sur une face de la feuille transparente sur laquelle il empreinte le relief.
- La feuille transparente est mise en place entre deux rouleaux de laminage dont l'un des rouleaux forme l'empreinte comportant le relief. L'autre rouleau applique une pression sur la face sensiblement lisse de la feuille transparente, ce qui permet au rouleau formant empreinte de marquer le relief sur l'autre face de la feuille transparente.
- Une étape de dépôt de couleur, de préférence d'encre, sur la feuille transparente de manière localisée au niveau du relief complémentaire une fois que le relief complémentaire a été formé. Le dépôt de couleur est réalisé de manière locale à l'aide d'injecteur ou de puvérisateur.
- Une étape de préchauffage de la feuille transparente comprenant le relief complémentaire avant sa mise en place dans le moule d'injection. L'étape de préchauffage, dont les conditions d'opération sont connues en soi, permet de rendre la matière plastique assez maléable pour pouvoir lui donner facilement sa forme finale par pression dans le moule d'injection avant ou pendant l'injection de la matière plastique.
- Une étape de thermoformage de la feuille transparente comprenant le relief complémentaire avant sa mise en place dans le moule d'injection, de manière à donner à la feuille transparente une forme sensiblement identique à sa forme finale sur la pièce de carrosserie. Les conditions d'opération de l'étape de thermoformage sont connues en soi. En thermoformant la feuille transparente, il n'y a donc plus besoin de déformer la feuille transparente dans le moule d'injection.

Nous allons maintenant présenter plusieurs modes de réalisation de l'invention donnés à titre d'exemple non limitatif et à l'appui des figures annexées sur lesquelles :
- la figure 1 représente une vue schématique d'une feuille transparente selon un mode de réalisation de l'invention,
- la figure 2 représente une vue schématique d'une pile de feuilles transparentes découpées selon un mode de réalisation de l'invention,
- la figure 3 représente une vue schématique d'un procédé de fabrication selon un mode de réalisation de l'invention,
- la figure 4 représente une vue schématique d'un procédé de fabrication selon un autre mode de réalisation de l'invention,
- la figure 5 représente une vue schématique en coupe transversale d'une pièce de carrosserie selon un mode de réalisation, et
- la figure 6 représente une vue agrandie d'une partie de la figure 5.

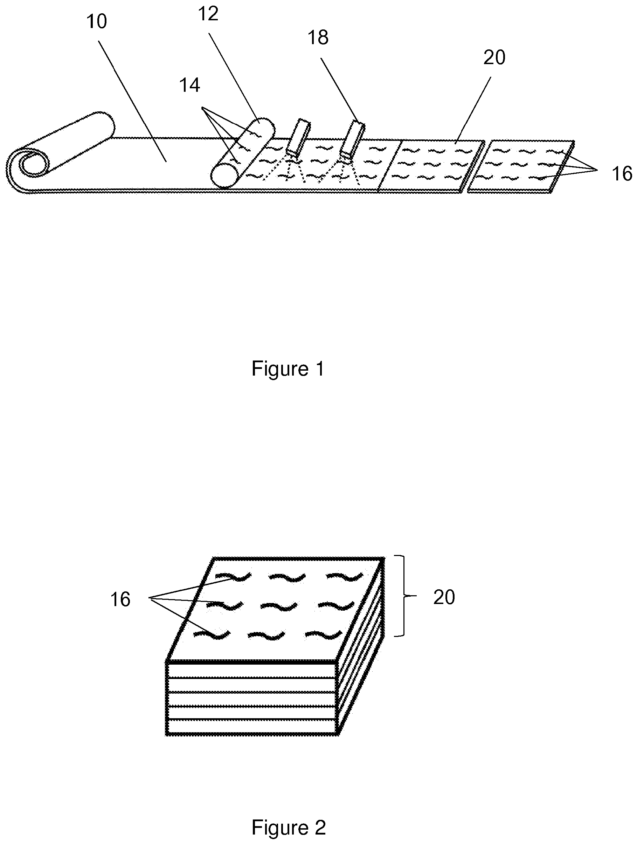

Comme illustré sur la figure 1, une feuille transparente 10 est déroulée, sur laquelle sont appliquées, dans cet ordre, les étapes suivantes :
- une étape de marquage ou d'embossage durant laquelle un rouleau de laminage 12 comprenant une série de trois reliefs locaux 14 alignés à sa surface s'applique sur une face de la feuille transparente 10 pour y générer à chaque passage trois reliefs complémentaires 16 aux reliefs locaux du rouleau de laminage à chaque;
- une étape de coloration durant laquelle un injecteur 18 injecte de l'encre de couleur de manière localisée et au moins partiellement sur un ou plusieurs reliefs complémentaires 16 de la feuille transparente ; et
- une étape de découpe durant laquelle la feuille transparente embossée et colorée est découpée à une dimension correspondant approximativement à la dimension de la pièce à mouler ou plus petite que la pièce à mouler, par exemple lorsque la feuille est destinée à mouler un insert local d'une pièce. Une marge est toutefois à prévoir en raison d'une éventuellement déformation de la feuille transparente prévue avant l'injection de la matière sur celle-ci. Le morceau 20 découpé comporte neuf reliefs complémentaires 16 disposés en une matrice carrée de trois.

Des gravures microscopiques peuvent être réalisées au niveau des reliefs 14.

Les morceaux de feuilles découpées 20 sont ensuite empilés en attendant leur utilisation.

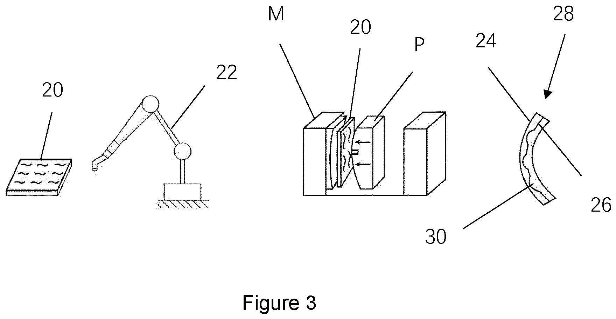

Dans le mode de réalisation illustré par la figure 3, le morceau 20 de feuille transparente embossée et colorée est d'abord préchauffé par un laser 22 ou un four à une température suffisante, par exemple comprise entre 185°C et 205°C si la feuille est en polycarbonate, pour être plus facilement déformable. Le morceau 20 préchauffé est par la suite placé dans le moule d'injection, sa face lisse 24 placée contre la matrice M du moule et sa face 26 comprenant les reliefs complémentaires 16 est dirigée vers le poinçon P du moule. La matrice M et le poinçon P comportent à leur surfaces de contact du morceau 20 une forme courbée pour pouvoir donner au morceau 20 et à la pièce finale 28 une forme courbée. Le moulage se réalise de la manière suivante : le morceau 20 préchauffé est placé dans la position décrite dans le moule ; le poinçon P se déplace vers la matrice M jusqu'à l'application d'une pression sur le morceau 20 qui le déforme jusqu'à sa forme sur la pièce finale 28 ; le poinçon P s'écarte de la matrice M jusqu'à former la chambre d'injection ; une matière plastique en fusion est injectée dans la chambre d'injection et forme après refroidissement la partie interne 30 de la pièce 28.

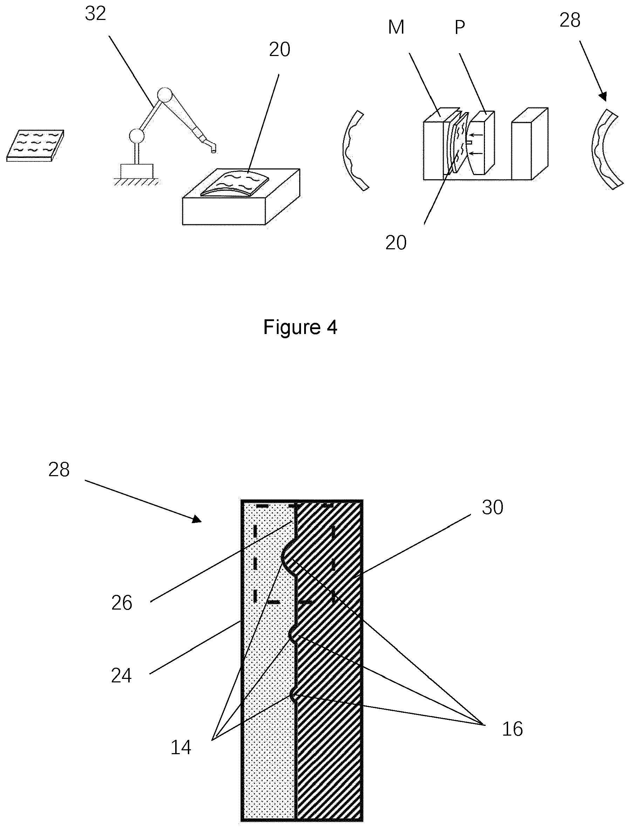

Dans un autre mode de réalisation illustré sur la figure 4, le morceau 20 est thermoformé avant sa mise en place dans le moule d'injection. Le thermoformage consiste en chauffer le morceau 20 à une température suffisante, par exemple comprise entre 185°C et 205°C si la feuille est en polycarbonate, par un laser 32 ou un four et à l'aide d'un moule ou d'une empreinte, donner au morceau 20 une forme courbée sensiblement identique à sa forme finale sur la pièce 28. Le thermoformage peut se faire sous vide ou par pression. Le morceau 20 courbé est ensuite positionné dans le moule dans la position décrite pour la figure 3 et l'injection se fait de la même façon, la différence consistant en la forme déjà courbée du morceau 20 lors de sa mise en place dans le moule et ne nécessitant donc pas une étape de déformation préalable par le poinçon.

La pièce finale 28 obtenue comprend une paroi formée de deux parties :
- une partie externe 20 qui comporte une feuille transparente ayant une face 26 comportant neuf reliefs locaux 14 disposés en une matrice de trois à l'interface des deux parties et une autre face 24 sensiblement lisse à la surface de la paroi, et
- une partie interne 30 en matériau plastique injecté ayant une face comportant neuf reliefs complémentaires 16 à ceux de la partie externe à l'interface des deux parties.

Les reliefs 14 sont des creux de différentes tailles et les reliefs complémentaires 16 sont des protubérences qui complètent ces creux.

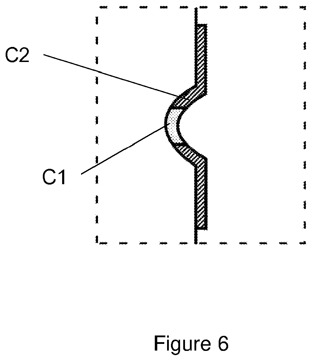

Sur la figure 6, les deux zones colorées correspondent à deux couleurs d'encre : une couleur C1 est positionnée au fond du creux et une autre couleur C2 est positionnée sur les pentes du creux. Le nombre de couleurs utilisées n'est pas limité.

L'invention n'est pas limitée aux modes de réalisation présentés et d'autres modes de réalisation apparaîtront clairement à l'homme du métier.

## Revendications

1. Pièce de carrosserie (28) pour véhicule automobile en matière plastique, comportant une paroi formée d'une partie externe et d'une partie interne, **caractérisée en ce que** :
- la partie externe (20) comporte une feuille transparente (10) ayant une face (26) comportant un relief local (14) à l'interface des deux parties et une autre face sensiblement lisse (24) à la surface de la paroi, et
- la partie interne (30) est en matériau plastique injecté ayant une face comportant un relief complémentaire (16) à celui de la partie externe (20) à l'interface des deux parties (20, 30).

2. Pièce de carrosserie (28) selon la revendication précédente, dans laquelle l'épaisseur de la partie externe (20) est supérieure à 0.75 mm, de préférence supérieure à 2 mm.

3. Pièce de carrosserie (28) selon l'une quelconque des revendications précédentes, dans laquelle un dépôt de couleur, de préférence d'encre, est présent au niveau du relief de la partie externe (20).

4. Pièce de carrosserie (28) selon l'une quelconque des revendications précédentes, dans laquelle le relief (14) de la partie externe (20) comprend une gravure apte à diffracter la lumière.

5. Pièce de carrosserie (28) selon l'une quelconque des revendications précédentes, dans laquelle la partie interne (30) est opaque.

6. Pièce de carrosserie (28) selon l'une quelconque des revendications précédentes, dans laquelle la partie externe (20) est fabriquée dans un matériau choisi parmi : le polypropylène, le polyméthacrylate de méthyle, le polycarbonate, le polytéréphtalate d'éthylène.

7. Pièce de carrosserie (28) selon l'une quelconque des revendications précédentes, dans laquelle la partie interne (40) est fabriquée dans un matériau choisi parmi : le polypropylène, l'acrylonitrile styrène acrylate, l'acrylonitrile butadiène styrène, le polytéréphtalate d'éthylène.

8. Pièce de carrosserie (28) selon l'une quelconque des revendications précédentes, dans laquelle la pièce de carrosserie est une porte, un coffre, un toit, un hayon, un pare-choc ou un bas de caisse.

9. Pièce de carrosserie (28) selon l'une quelconque des revendications précédentes, dans laquelle la pièce de carrosserie (28) est d'épaisseur globale constante.

10. Procédé de fabrication d'une pièce de carrosserie (28) pour véhicule automobile en matière plastique comportant un relief local visible à travers une feuille transparente ayant une surface extérieure sensiblement lisse **caractérisée en ce qu'**elle comprend les étapes suivantes :
- mis en place de la feuille transparente (10) en contact d'une empreinte (12) comportant un relief local (14),
- pression de la feuille transparente (10) contre l'empreinte (12) de façon qu'une de ses faces (26) se déforme et épouse la forme du relief (14) en formant un relief complémentaire (16), l'autre face (24) conservant une surface sensiblement lisse,
- mis en place de la feuille transparente comprenant le relief complémentaire (16) dans un moule d'injection, et
- injection d'une matière plastique sur la face de la feuille transparente comportant le relief complémentaire (16).

11. Procédé de fabrication selon la revendication précédente, dans laquelle la feuille transparente (10) est mise en place sur une presse formant l'empreinte (12) comportant le relief (14).

12. Procédé de fabrication selon la revendication 10, dans laquelle la feuille transparente (10) est mise en contact d'un rouleau de laminage (12) formant l'empreinte comportant le relief (14).

13. Procédé de fabrication selon la revendication 10, dans laquelle la feuille transparente (10) est mise en place entre deux rouleaux de laminage (12) dont l'un des rouleaux forme l'empreinte comportant le relief (14).

14. Procédé de fabrication selon l'une quelconque des revendications 10 à 13, comprenant une étape de dépôt de couleur, de préférence d'encre, sur la feuille transparente (10) de manière localisée au niveau du relief complémentaire (16) une fois que le relief complémentaire (16) a été formé.

15. Procédé de fabrication selon l'une quelconque des revendications 10 à 14, comprenant une étape de préchauffage de la feuille transparente (10) comprenant le relief complémentaire (16) avant sa mise en place dans le moule d'injection.

16. Procédé de fabrication selon l'une quelconque des revendications 10 à 14, comprenant une étape de thermoformage de la feuille transparente (10) comprenant le relief complémentaire (16) avant sa mise en place dans le moule d'injection, de manière à donner à la feuille transparente (10) une forme sensiblement identique à sa forme finale sur la pièce de carrosserie (28), de préférence en lui appliquant une température supérieure à sa température de transition vitreuse.

## Patentansprüche

1. Karosserieteil (28) für ein Kraftfahrzeug aus Kunststoff, mit einer Wand, die aus einem äußeren Teil und einem inneren Teil gebildet ist, **dadurch gekennzeichnet, dass**:
- der äußere Teil (20) eine transparente Folie (10) aufweist, die eine Seite (26) mit einem lokalen Relief (14) an der Schnittstelle der beiden Teile und eine andere, im Wesentlichen glatte Seite (24) an der Oberfläche der Wand aufweist, und
- der innere Teil (30) aus gespritztem Kunststoffmaterial besteht und eine Seite mit einem Relief (16) aufweist, das komplementär zu dem des äußeren Teils (20) an der Schnittstelle der beiden Teile (20, 30) ist.

2. Karosserieteil (28) nach dem vorhergehenden Anspruch, wobei die Dicke des äußeren Teils (20) größer als 0,75 mm, vorzugsweise größer als 2 mm, ist.

3. Karosserieteil (28) nach einem der vorhergehenden Ansprüche, bei dem eine Farbablagerung, vorzugsweise Tinte, am Relief des äußeren Teils (20) vorhanden ist.

4. Karosserieteil (28) nach einem der vorhergehenden Ansprüche, wobei das Relief (14) des äußeren Teils (20) eine Gravur aufweist, die ausgebildet ist, das Licht zu beugen.

5. Karosserieteil (28) nach einem der vorhergehenden Ansprüche, wobei der innere Teil (30) lichtundurchlässig ist.

6. Karosserieteil (28) nach einem der vorhergehenden Ansprüche, wobei der äußere Teil (20) aus einem Material hergestellt ist, das aus Polypropylen, Polymethylmethacrylat, Polycarbonat, Polyethylenterephthalat ausgewählt ist.

7. Karosserieteil (28) nach einem der vorhergehenden Ansprüche, wobei der innere Teil (40) aus einem Material hergestellt ist, das aus Polypropylen, Acrylnitril-Styrol-Acrylat, Acrylnitril-Butadien-Styrol, Polyethylenterephthalat ausgewählt ist.

8. Karosserieteil (28) nach einem der vorhergehenden Ansprüche, wobei das Karosserieteil eine Tür, ein Kofferraumdeckel, ein Dach, eine Heckklappe, ein Stoßfänger oder ein Seitenschweller ist.

9. Karosserieteil (28) nach einem der vorhergehenden Ansprüche, wobei das Karosserieteil (28) eine konstante Gesamtdicke aufweist.

10. Verfahren zur Herstellung eines Karosserieteils (28) für ein Kraftfahrzeug aus Kunststoff, das ein lokales Relief aufweist, das durch eine transparente Folie mit einer im Wesentlichen glatten Außenfläche sichtbar ist, **dadurch gekennzeichnet, dass** es die folgenden Schritte aufweist:
- Anlegen der transparenten Folie (10) in Kontakt mit einem Abdruck (12), der ein lokales Relief (14) aufweist,
- Andrücken der transparenten Folie (10) gegen den Abdruck (12), so dass eine ihrer Seiten (26) sich verformt und sich der Form des Reliefs (14) anpasst, indem sie ein komplementäres Relief (16) bildet, wobei die andere Seite (24) eine im Wesentlichen glatte Oberfläche beibehält,
- Anordnen der transparenten Folie, die das komplementäre Relief (16) in einer Spritzgussform aufweist, und
- Einspritzen eines Kunststoffmaterials auf die Seite der transparenten Folie, die das komplementäre Relief (16) aufweist.

11. Herstellungsverfahren nach dem vorhergehenden Anspruch, bei dem die transparente Folie (10) auf eine Presse gelegt wird, die den Abdruck (12) mit dem Relief (14) bildet.

12. Herstellungsverfahren nach Anspruch 10, bei dem die transparente Folie (10) mit einer Laminierwalze (12) in Kontakt gebracht wird, die den Abdruck mit dem Relief (14) bildet.

13. Herstellungsverfahren nach Anspruch 10, bei dem die transparente Folie (10) zwischen zwei Laminierwalzen (12) angeordnet wird, von denen eine Walze den Abdruck mit dem Relief (14) bildet.

14. Herstellungsverfahren nach einem der Ansprüche 10 bis 13, aufweisend einen Schritt des Aufbringens von Farbe, vorzugsweise Tinte, auf die transparente Folie (10) in lokalisierter Weise an dem komplementären Relief (16), nachdem das komplementäre Relief (16) gebildet wurde.

15. Herstellungsverfahren nach einem der Ansprüche 10 bis 14, aufweisend einen Schritt des Vorwärmens der transparenten Folie (10) mit dem komplementären Relief (16) vor dem Einlegen in die Spritzgussform.

16. Herstellungsverfahren nach einem der Ansprüche 10 bis 14, aufweisend einen Schritt des Warmformens der transparenten Folie (10) mit dem komplementären Relief (16) vordem Einlegen in die Spritzgussform, um der transparenten Folie (10) eine Form zu geben, die im Wesentlichen identisch mit ihrer endgültigen Form auf dem Karosserieteil (28) ist, vorzugsweise durch Anwendung einer Temperatur, die über ihrer Glasübergangstemperatur liegt.

## Claims

1. Bodywork part (28) for a motor vehicle of plastic, comprising a wall formed by an external part and an internal part, **characterised in that**:
- the outer part (20) comprises a transparent sheet (10) having one face (26) having a local relief (14) at the interface of the two parts and another sensibly smooth face (24) on the surface of the wall, and
- the inner part (30) is made of injected plastic material having a face having a complementary relief (16) to that of the external part (20) at the interface of the two parts (20, 30).

2. Body part (28) according to the preceding claim, wherein the thickness of the outer part (20) is greater than 0.75 mm, preferably more than 2 mm.

3. Body part (28) according to any one of the preceding claims, wherein a color deposit, preferably ink, is present at the relief of the outer part (20).

4. Body part (28) according to any one of the preceding claims, wherein the relief (14) of the external part (20) comprises an engraving capable of diffracting the light.

5. Body piece (28) according to any one of the preceding claims, wherein the internal part (30) is opaque.

6. Body part (28) according to any one of the preceding claims, wherein the outer part (20) is made of a material selected from: polypropylene, polymethyl methacrylate, polycarbonate, polyethylene terephthalate.

7. Body part (28) according to any one of the preceding claims, wherein the inner part (40) is made of a material selected from: polypropylene, acrylonitrile styrene acrylate, acrylonitrile butadiene styrene, polyethylene terephthalate.

8. Body part (28) according to any of the preceding claims, in which the body part is a door, trunk, roof, tailgate, bumper or sill.

9. Body part (28) according to any one of the preceding claims, wherein the body part (28) is of constant overall thickness.

10. Method of manufacturing a body part (28) for a motor vehicle of plastic material having a local relief visible through a transparent sheet having a substantially smooth outer surface **characterized in that** it comprises the following steps:
- placing the transparent sheet (10) in contact with an imprint (12) having a local relief (16),
- pressure of the transparent sheet (10) against the imprint (12) so that one of its faces (26) deforms and follows the shape of the relief (16) forming a complementary relief (14), the other face (24) retaining a substantially smooth surface,
- placed the transparent sheet comprising the complementary relief (14) in an injection mold, and
- injection of a plastic material on the face of the transparent sheet with the complementary relief (14).

11. A manufacturing method according to the preceding claim, wherein the transparent sheet (10) is placed on a press forming the imprint (12) comprising the relief (16).

12. A method of manufacturing according to claim 10, wherein the transparent sheet (10) is put in contact with a rolling roller (12) forming the imprint comprising the relief (16).

13. A method of manufacturing according to claim 10, wherein the transparent sheet (10) is placed between two rolling rolls (12) of which one of the rollers forms the imprint comprising the relief (16).

14. A method of manufacturing any one of claims 10 to 13, comprising a color deposition step, preferably ink, on the transparent sheet (10) in a localized manner at the level of the complementary relief (14) once the complementary relief (14) has been formed.

15. A manufacturing method according to any one of claims 10 to 14, comprising a preheating step of the transparent sheet (10) comprising the additional relief (14) before its placement in the injection mold.

16. A method of manufacturing any one of claims 10 to 14, comprising a thermoforming step of the transparent sheet (10) comprising the additional relief (14) before its placement in the injection mold, so as to give the transparent sheet (10) a shape substantially identical to its final shape on the body part (28), preferably en applying a temperature higher than its glass transition temperature.
